# FASCICULE DE BREVET EUROPEEN

(11) **EP 0 378 481 B1**
(45) Date de publication et mention de la délivrance du brevet: **14.04.1993**
(21) Numéro de dépôt: 90400078.3
(22) Date de dépôt: 10.01.1990
(51) Int. Cl.: F16L 11/115, F16L 11/112

(54) **Tuyau étanche aux gaz sans date de péremption et procédé de fabrication d'un tel tuyau**
Gasdichter Schlauch ohne Haltbarkeitsdatum und Verfahren zu seiner Herstellung
Gastight tube without expiration date, and manufacturing process

(30) Priorité: 11.01.1989 FR 8900273
(43) Date de publication de la demande: 18.07.1990
(73) Titulaire: NOVAFLEX, F-92250 La Garenne Colombes (FR)
(72) Inventeur: Dutat, Dimitri, F-78720 Cernay-La-Ville (FR)
(74) Mandataire: Boivin, Claude

(56) Documents cités:
- FR-A- 2 223 619
- FR-A- 2 565 142
- GB-A- 979 065
- GB-A- 1 283 216

## Description

La présente invention concerne un tuyau étanche aux gaz du type comportant un tube intérieur formé par une bande profilée de forme ondulée enroulée hélicoïdalement et soudée de façon étanche aux bords de bande en contact.

On connait dans l'état de la technique de tels tuyaux décrits en particulier dans FR-A-2 223 619. Ces tuyaux sont destinés à des conduites étanches aux gaz et/ou aux liquides et sont d'usage courant dans l'industrie. Ces tuyaux ne présentent pas toutefois les qualités mécaniques suffisantes pour répondre aux normes en vigueur, en particulier en France concernant l'alimentation d'appareils électroménagers fonctionnant au gaz de ville. De tels appareils sont raccordés aux conduites d'arrivée du gaz en France et dans certains autres pays exclusivement avec des tuyaux en caoutchouc ou en matières synthétiques présentant l'inconvénient de nécessiter un remplacement régulier pour répondre aux normes de sécurité. L'aménagement des cuisines faisant de plus en plus appel à des appareils encastrés dans des meubles de façon permanente, l'utilisateur néglige souvent de remplacer régulièrement les tuyaux d'arrivée du gaz et il en résulte des risques accrus de fuites par dégradation dudit tuyau.

De son côté, le document GB-A- 1 283 216 décrit un tube flexible comportant une tresse claire en matière plastique et un revêtement extérieur également en matière plastique.

La présente invention a pour objet un tuyau étanche aux gaz présentant une durée de vie notablement améliorée compatible avec une mise en oeuvre dans une cuisine à modules encastrés rendant l'accès audit tuyau difficile, voire impossible.

Ce tuyau comporte un tube formé par une bande profilée de forme ondulée enroulée hélicoïdalement et soudée de façon étanche aux bords de bande en contact, et est caractérisé en ce que ledit tube est recouvert par une tresse claire de fuseaux de fils en acier inoxydable et par un revêtement extérieur épais en matière plastique souple et en ce que la bande est en acier inoxydable. Par épais, il faut entendre une épaisseur supérieure à l'épaisseur des bandes profilées constituant le tube intérieur.

Un tel tuyau présente des qualités mécaniques execeptionnelles, et en particulier une grande souplesse évitant toute rupture ou fuite, même lorsqu'il est soumis à des contraintes importantes, par exemple par courbure selon un rayon très faible. L'alliance du tube intérieur, de la tresse claire et du revêtement extérieur souple est à l'origine d'une synergie dans laquelle chacun de ces matériaux atténue les contraintes destructrices imposées aux autres matériaux lorsque le tuyau est manipulé sans précautions. Par "tresse claire" on entend une tresse dont le rapport entre les surfaces pleines et les surfaces vides est inférieur ou égal à 60%.

Selon un mode de réalisation préféré, les fils métalliques des fuseaux forment entre eux un angle compris entre 40 et 50 degrés, de préférence 45 degrés. La tresse présente dans ce cas la meilleure résistance aux tractions et aux torsions et participe de façon optimale à la résistance mécanique du tuyau selon la présente invention.

Le taux de recouvrement de la tresse claire est avantageusement compris entre 40 et 60%, de préférence 50%.

Avantageusement, l'épaisseur des bandes profilées est comprise entre 0,09 à 0,11 millimètre. Une telle épaisseur s'est avérée la plus appropriée pour allier la résistance à l'écrasement à la souplesse requise lors des déformations axiales selon un faible rayon de courbure.

De préférence, ladite tresse est soudée sur le tube intérieur. Cette soudure est par exemple du type tungstène inerte-gaz. Le revêtement extérieur est avantageusement réalisé en matière plastique à base de P.V.C. d'une épaisseur supérieure à 1,7 millimètre.

La présente invention concerne également un procédé de fabrication d'un tel tuyau consistant à co-extruder le revêtement extérieur souple et le tube intérieur recouvert de ladite tresse. Par co-extruder, il faut entendre faire passer dans une même filière le tube intérieur recouvert de sa tresse et la matière plastique à l'état visqueux.

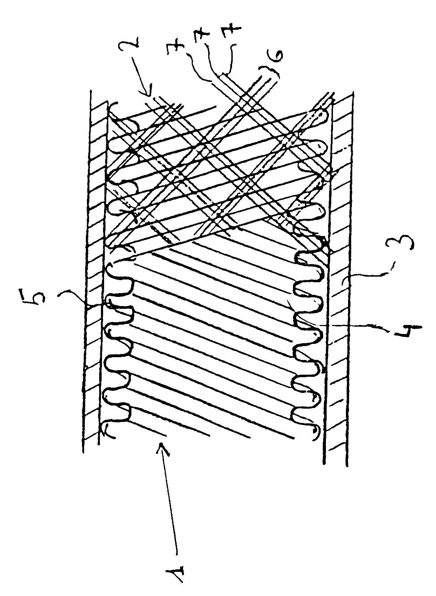

L'invention va maintenant être expliquée plus en détail dans ce qui suit à l'aide du dessin annexé dont la Figure Unique représente une vue d'un tuyau selon la présente invention, la moitié du tuyau tournée vers l'observateur ayant été supprimée à gauche.

Le tuyau est constitué par un tube intérieur 1, une tresse 2 et un revêtement extérieur 3.

Le tube 1 est constitué par une bande profilée 4 enroulée hélicoïdalement de telle manière que les bords latéraux se recouvrent en une onde 5 et sont soudés par soudure tungstène inerte-gaz. La bande profilée 4 présente dans l'exemple décrit un seul pli latéral sans que cela puisse être considéré comme étant limitatif. Cette bande profilée 4 est réalisée en acier inoxydable d'une épaisseur d'un dizième de millimètre.

La tresse 2 est constituée par des fuseaux 6 de trois fils 7 d'acier inoxydable. Cette tresse 2 est soudée sur le tube intérieur 1. Elle est recouverte par une enveloppe extérieure 3 en matière plastique souple d'une épaisseur d'un millimètre.

La présente invention n'est bien entendu aucunement limitée à l'exemple de réalisation décrit dans ce qui précède, mais s'étend au contraire à tous les modes de réalisation entrant dans le cadre des revendications.

## Revendications

1. Tuyau étanche aux gaz du type comportant un tube (1) formé par une bande métallique profilée de forme ondulée enroulée hélicoïdalement et soudée de façon étanche aux bords de bande en contact,
caractérisé en ce que ledit tube (1) est recouvert par une tresse claire (2) de fuseaux (6) de fils (7) en acier inoxydable et par un revêtement extérieur (3) épais en matière plastique souple et en ce que la bande (4) est en acier inoxydable.

2. Tuyau étanche aux gaz selon la revendication 1, caractérisé en ce que les fils métalliques (7) des fuseaux (6) forment entre eux un angle compris entre 40 et 50 degrés, de préférence 45 degrés.

3. Tuyau étanche aux gaz selon l'une quelconque des revendications 1 à 2,
caractérisé en ce que la tresse claire (2) présente un recouvrement compris entre 40% et 60%, de préférence 50%.

4. Tuyau étanche aux gaz selon l'une quelconque des revendications 1 à 3,
caractérisé en ce que l'épaisseur des bandes profilées (4) est comprise entre 0,09 et 0,11 millimètre.

5. Tuyau étanche aux gaz selon l'une quelconque des revendications 1 à 4,
caractérisé en ce que ladite tresse (2) est soudée sur le tube intérieur (1).

6. Tuyau étanche aux gaz selon l'une quelconque des revendications 1 à 5,
caractérisé en ce que le revêtement extérieur (3) est réalisé en une matière plastique à base de P.V.C. d'une épaisseur supérieure à 1,7 millimètre.

7. Procédé de fabrication d'un tuyau étanche aux gaz selon l'une quelconque des revendications précédentes,
caractérisé en ce que le revêtement extérieur est co-extrudé à chaud avec le tube intérieur recouvert de ladite tresse.

## Patentansprüche

1. Gasdichter Schlauch mit einem Rohr (1), das aus einem wellenförmig profilierten Metallband gebildet ist, welches spiralförmig gewickelt und an seinen sich berührenden Kanten dicht zusammengeschweißt ist, **dadurch gekennzeichnet**, daß das Rohr (1) mit einem durchsichtigen Geflecht (2) aus Strängen (6) von Fäden (7) aus rostfreiem Stahl und mit einer dicken Außenhülle (3) aus biegsamem Kunststoff überzogen ist und daß das Band (4) aus rostfreiem Stahl besteht.

2. Gasdichter Schlauch nach Anspruch 1, dadurch gekennzeichnet, daß die metallischen Fäden (7) der Stränge (6) untereinander einen Winkel im Bereich von 40 bis 50 Grad, bevorzugt von 45 Grad, ausbilden.

3. Gasdichter Schlauch nach einem der Ansprüche 1 bis 2, dadurch gekennzeichnet, daß das durchsichtige Geflecht (2) eine Bedeckung im Bereich von 40% bis 60%, bevorzugt von 50%, ergibt.

4. Gasdichter Schlauch nach einem der Ansprüche 1 bis 3, dadurch gekennzeichnet, daß die Dicke der profilierten Bänder (4) im Bereich von 0,09 bis 0,11 Millimeter liegt.

5. Gasdichter Schlauch nach einem der Ansprüche 1 bis 4, dadurch gekennzeichnet, daß das besagte Geflecht (2) auf das innere Rohr (1) aufgeschweißt ist.

6. Gasdichter Schlauch nach einem der Ansprsüche 1 bis 5, dadurch gekennzeichnet, daß die Außenhülle (3) aus einem auf PVC basierenden Kunststoff mit einer Dicke größer als 1,7 Millimeter hergestellt ist.

7. Verfahren zur Herstellung eines gasdichten Schlauches nach einem der vorhergehenden Ansprüche, dadurch gekennzeichnet, daß die Außenhülle gemeinsam mit dem inneren, mit besagtem Geflecht bedeckten Rohr, warmextrudiert wird.

## Claims

1. Gas sealed pipe of the type comprising a tube (1) formed by an wave-shaped profiled metallic strip helically wound and seal-welded to the edges of the codntact strip,
wherein said tube (1) is covered by a steel clear braid (2) of spindles (6) of stainless steel wires (7) and by a thick plastic flexible coating and wherein the strip (4) is made of stainless steel.

2. Gas sealed pipe according to claim 1, wherein the metallic wires (7) of the spindles (6) together form an angle between of 40 to 50 degrees and preferably 45 degrees.

3. Gas sealed pipe according to claim 1 or 2,
wherein the clear braid (2) has a coating covering between 40 and 60% of said braid and preferably 50%.

4. Gas sealed pipe according to any one of claims 1 to 3,
wherein the thickness of the profiled strips (4) is between 0.09 and 0.11 millimeters.

5. Gas sealed pipe according to any one of claims 1 to 4,
wherein said braid (2) is welded onto the internal tube (1).

6. Gas sealed pipe according to any one of claims 1 to 5,
wherein the external covering (3) is made of a PVC-based plastic material whose thickness is larger than 1.7 millimeters.

7. Method for producing a sealed gas pipe according to any one of the preceding claims, wherein the external coating is hot co-extruded with the coated internal pipe of said braid.
